# EUROPÄISCHE PATENTSCHRIFT

(11) **EP 3 347 779 B1**
(45) Veröffentlichungstag und Bekanntmachung des Hinweises auf die Patenterteilung: **20.04.2022**
(21) Anmeldenummer: 16757182.7
(22) Anmeldetag: 12.08.2016
(51) Int. Cl.: G05B 19/042

(54) **VERFAHREN ZUR ENERGIEVERWALTUNG EINES FELDGERÄTS DER PROZESSAUTOMATISIERUNG**
METHOD FOR THE ENERGY MANAGEMENT OF A PROCESS-AUTOMATION FIELD DEVICE
PROCÉDÉ POUR GÉRER L'ÉNERGIE D'UN APPAREIL DE TERRAIN EN AUTOMATISATION DES PROCESSUS

(30) Priorität: 10.09.2015 DE 102015115275
(43) Veröffentlichungstag der Anmeldung: 18.07.2018
(73) Patentinhaber: Endress+Hauser SE+Co. KG, 79689 Maulburg (DE)
(72) Erfinder: SEILER, Christian, 79424 Auggen (DE); KLÖFER, Peter, 79585 Steinen (DE)
(74) Vertreter: Andres, Angelika Maria
(86) Internationale Anmeldenummer: PCT/EP2016/069200
(87) Internationale Veröffentlichungsnummer: WO 2017/041989

(56) Entgegenhaltungen:
- US-A1- 2006 290 328

## Beschreibung

Die Erfindung betrifft ein Verfahren zur Energieverwaltung eines Feldgeräts der Prozessautomatisierung mit erstem Modul und mindestens einem zweiten Modul.

In der Prozessautomatisierungstechnik werden vielfach Feldgeräte eingesetzt, die zur Erfassung und/oder Beeinflussung von Prozessgrößen dienen. Als Feldgeräte werden im Prinzip alle Geräte bezeichnet, die prozessnah eingesetzt werden und die prozessrelevante Informationen liefern oder verarbeiten. Neben Sensoren und Aktoren werden als Feldgeräte allgemein auch solche Einheiten bezeichnet, die direkt an einem Feldbus angeschlossen sind, und zur Kommunikation mit einer Steuerstelle wie einem Leitsystem dienen, wie z.B. Remote I/Os, Gateways, Linking Devices und Wireless Adapter.

Eine Vielzahl solcher Feldgeräte wird von der Endress+Hauser-Gruppe hergestellt und vertrieben.

Häufig werden Feldgeräte mittels Zweidrahttechnik an eine Leitstelle angeschlossen. Bei der Zweidrahttechnik, oder auch Zweileitertechnik genannt, werden Strom zur Energieversorgung und Kommunikationssignale über die gleiche Leitung geschickt: ein Draht für den Hinweg, ein Draht für den Rückweg. In anderen Worten nutzen Speisung und Signal die gleiche Leitung; es gibt keine separate Energieversorgung. Dieser Strom bzw. die entsprechende Leistung muss von den Feldgeräten verwaltet und unter den einzelnen Komponenten des Feldgeräts geteilt werden. So müssen etwa das Sensorelement, die Kommunikation und die Steuerung gemeinsam mit dem vorhandenen Leistungsbudget auskommen.

Der Verzicht auf drahtgebundene Datenübertragung zum Anschluss eines Feldgeräts hat im Industriebereich das Potential Kosten für Verkabelung zu reduzieren, die Gebrauchstauglichkeit zu verbessern und damit Nutzen für den Anwender zu generieren.

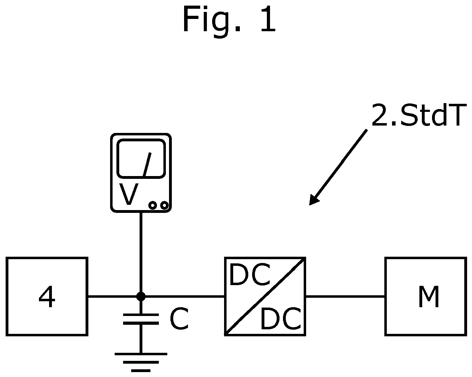

Zur Energieversorgung sind Funktionsmodule wie etwa ein Sensorelement M oder ein Kommunikationsmodul nach einem Gleichspannungswandler DC geschaltet, der die Eingangsspannung aus dem Zweiliterbus 4 in eine für das jeweilige Funktionsmodul geeignete Spannung wandelt. Siehe dazu eine exemplarische elektronische Schaltung 2.StdT aus dem Stand der Technik in Fig. 1. Zur Messfunktion wird bei bestimmten Messgeräten, wie etwa zu Messung des Füllstandes nach dem Radarprinzip, mehr Leistung verbraucht als die 4..20 mA-Speisung zur Verfügung stellen kann. Daher wird ein Energiespeicherkondensator C zur Speicherung von Energie zur Versorgung des Sensorelements notwendig. Man spricht auch von Pufferung oder vom Pufferkondensator C. Der Speicherkondensator C wird zwischen den Messphasen direkt aus dem Zweileiterbus 4 geladen. Die Messung wird nur dann ausgeführt, wenn sich der Ladezustand des Speicherkondensators C in einem festgelegten Bereich bewegt. Der Ladezustand wird etwa über die Spannung V über dem Speicherkondensators C gemessen. Die US 7,262,693 beispielsweise offenbart die Verwendung eines Kondensators um die Energie aus dem Bus zwischenzuspeichern um sie dann einem Drahtlosmodul zur Verfügung zu stellen.

Ebenso könnte ein Kommunikationsmodul vorhanden sein, die in gleicher Weise wie oben beschrieben mehr Leistung zum Betrieb, also zum Senden/Empfangen, benötigt als permanent und kontinuierlich verfügbar ist. Dies ist beispielweise bei WLAN, etwa nach einem Standard der IEEE-802.11-Familie, der Fall.

Andere drahtlose Kommunikationsmodule, wie etwa Bluetooth mit dem Protokollstapel Low Energy, sowie bestimmte Messfunktionen könnten heute vollständig mit der aus dem Bus zur Verfügung gestellten Leistung auch ohne Pufferung auskommen. Beide Funktionen, messen und kommunizieren, können meist jedoch nicht gleichzeitig betrieben werden, da die Leistungsbilanz des gesamten Gerätes eingehalten werden muss. In vielen Fällen wird daher auch heute eine Pufferung der Energie für alle Funktionsmodule eingesetzt.

Aus dem Stand der Technik ist die US 2006/0290328 A1 bekannt geworden, die ein Feldgerät zur Verwendung in einem industriellen Prozesssteuerungs- oder Überwachungssystem offenbart, welches Anschlüsse umfasst, die für den Anschluss an eine Zweidrahtleitung konfiguriert sind, um Daten und Energie bereitzustellen.

Der Erfindung liegt die Aufgabe zugrunde, die Funktionsfähigkeit aller Funktionsmodule eines Feldgeräts zu gewährleisten und die durch einen Zweileiterbus zur Verfügung gestellte Energie ohne Pufferung aller Funktionsmodule zu verwalten.

Die Aufgabe wird gelöst durch ein Verfahren zur Energieverwaltung eines Feldgeräts mit einem erstem Modul und mindestens einem zweiten Modul, wobei das Feldgerät durch einen Zweileiterbus mit Energie versorgt wird, wobei das erste Modul zumindest temporär mehr Energie verbraucht als der Zweileiterbus kontinuierlich liefert, und dem ersten Modul ein aus dem Zweileiterbus gespeister Energiespeicher zugeordnet ist. Das erste Modul wird somit durch einen Energiespeicher gespeist. Erst dadurch ist das erste Modul funktionsfähig. Das zweite Modul hingegen wird durch den Zweileiterbus kontinuierlich mit Energie versorgt, wobei das erste Modul ein Sensorelement zum Erfassen einer Messgröße umfasst, wobei das Sensorelement Werte an ein Drahtlosmodul weiterleitet, wobei das zweite Modul das Drahtlosmodul zum drahtlosen Übertragen der Werte an eine übergeordnete Einheit umfasst, und wobei der Betrieb des ersten und zweiten Moduls so gesteuert wird, dass das zweite Modul gegenüber dem ersten Modul Vorrang hat und das erste Modul gegebenenfalls zumindest temporär nicht funktionsfähig ist. Das zweite Modul ist dabei immer voll funktionsfähig.

Ein Funktionsmodul im Feldgerät kann somit die gesamte Energie in einer bestimmten Phase für sich beanspruchen. Typischerweise passt dasjenige Funktionsmodul seinen Betrieb an, welches einen eigenen Energiespeicher besitzt. Es darf nur so viel Leistung dauerhaft verwenden, wie zusätzlich gerade noch durch den Zweileiterbus zur Verfügung gestellt werden kann ohne den Betrieb des Funktionsmoduls ohne Energiespeicher zu stören.

In einer vorteilhaften Weiterbildung umfasst das zweite Modul keinen Energiespeicher und wird kontinuierlich und ausschließlich durch den Zweileiterbus mit Energie versorgt. Somit kann dieses Modul immer und dauerhaft voll funktionsfähig sein.

In einer bevorzugten Ausgestaltung teilt das zweite Modul dem ersten Modul seinen Betrieb mit und das erste Modul passt dann seinen Betrieb so an, dass die gesamte benötigte Energie des Feldgeräts durch den Zweileiterbus bereitgesellt werden kann. Das erste Modul synchronisiert sich somit mit dem zweiten Modul so, dass das zweite Modul (ohne Energiespeicher) immer mit ausreichend Energie aus dem Zweileiterbus versorgt wird. Dies kann etwa softwaregesteuert geschehen, falls beide Module etwa von einer intelligenten Einheit, etwa eine Mikrocontroller, gesteuert werden. Alternativ sind die Module in unterschiedlichen Schaltkreisen angeordnet und eine Kommunikation erfolgt durch entsprechende Kommunikationsleitungen oder Signalisierungsleitungen.

In einer alternativen vorteilhaften Ausgestaltung wird während des Betriebs des zweiten Moduls der Energiespeicher vom Zweileiterbus getrennt. Hierbei soll "während des Betriebs" so verstanden werden, dass dabei die Hauptfunktion des jeweiligen Moduls ausgeführt wird. Ist das zweite Modul etwa als Drahtlosmodul zum Senden und Empfangen von Werten ausgestaltet (siehe unten), ist die Hauptfunktion das Senden bzw. Empfangen. Während des Sendens bzw. Empfangs wird also der Energiespeicher getrennt. Ist das zweite Modul als Sensormodul ausgestaltet, wird der Energiespeicher während des Messens getrennt.

Vorteilhafterweise trennt das zweite Modul den Energiespeicher vom Zweileiterbus. Dann erfolgt die Trennung immer zum richtigen Zeitpunkt. Dies kann etwa softwaregesteuert oder über eine entsprechende Schaltung erfolgen. Alternativ oder davon gesteuert erfolgt die Trennung mittels einer intelligenten Einheit, etwa mittels eines Mikroprozessors.

Das Sensorelement wird dabei vom ersten Energiespeicher gespeist.

"Werte" im Sinne dieser Erfindung sind in einer ersten vorteilhaften Ausgestaltung als "von der Messgröße abhängige Werte" zu verstehen. Das heißt, das Sensorelement leitet von der Messgröße abhängige Werte an das Drahtlosmodul weiter, und das Drahtlosmodul überträgt drahtlos die von der Messgröße abhängigen Werte an eine übergeordnete Einheit.

In einer zweiten vorteilhaften Ausgestaltung sind "Werte" als Parameter zu verstehen, wobei als "Parameter" hierbei eine Stell- oder eine Einflussgröße verstanden werden soll, die auf das Sensorelement einwirkt und somit das Verhalten des Sensorelements ändert oder Informationen über den Zustand des Sensorelements liefert. Das heißt, das Sensorelement leitet Parameter an das Drahtlosmodul weiter, wobei das Drahtlosmodul diese Parameter an eine übergeordnete Einheit drahtlos überträgt. In einer weiteren vorteilhaften Weiterbildung werden Parameter in umgekehrter Richtung übertragen, d.h. eine übergeordnete Einheit überträgt drahtlos Parameter zum Drahtlosmodul, welches die Parameter an das Sensorelement weiterleitet.

In einer vorteilhaften Ausgestaltung umfasst das erste Modul somit ein Sensorelement, etwa zum Erfassen des Füllstandes, beispielsweise nach dem Radarprinzip. In einer weiteren Ausgestaltung umfasst das erste Modul ein Sensorelement zur Bestimmung eines Analyseparameters, insbesondere zur Messung von pH, Redoxpotential, auch ISFET, Leitfähigkeit, Trübung oder Sauerstoff. Weitere vorteilhafte Ausgestaltungen umfassen Sensorelemente zur Erfassung des Durchflusses nach den Prinzipien Coriolis, magnetische Induktion, Vortex und Ultraschall. Weitere vorteilhafte Ausgestaltungen umfassen Sensorelemente zur Erfassung des Füllstands nach den Prinzipien geführtes und frei strahlendes Radar (wie bereits erwähnt), sowie Ultraschall, auch zur Erkennung eines Grenzstandes, wobei zur Erkennung des Grenzstandes auch kapazitive Verfahren zur Anwendung kommen können. In einer weiteren Ausgestaltung umfasst das erste Modul ein Drahtlosmodul mit erhöhtem Energieverbrauch, also etwa ein WLAN-Modul, insbesondere nach dem Standard IEEE-802.11.

In einer bevorzugten Weiterbildung kann auch bei maximaler Sendeleistung des Drahtlosmoduls die gesamte benötigte Energie des Feldgeräts durch den Zweileiterbus bereitgestellt werden. Somit ist immer gewährleistet, dass das Drahtlosmodul voll funktionsfähig ist.

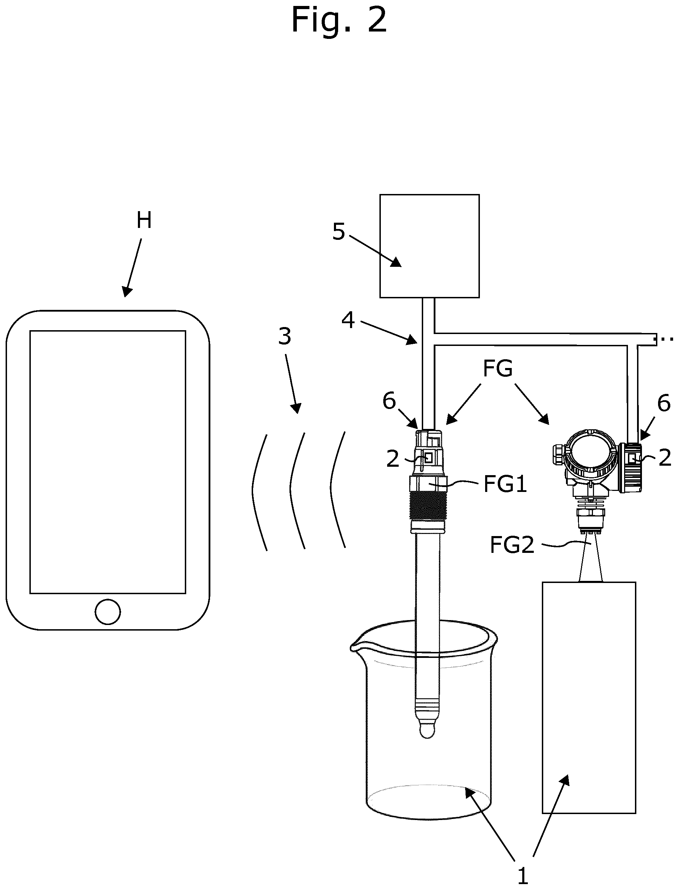

Die Erfindung wird anhand der nachfolgenden Figuren näherer erläutert. Es zeigen Fig. 2 ein Feldgerät in dem erfindungsgemäße Verfahren angewendet wird, und

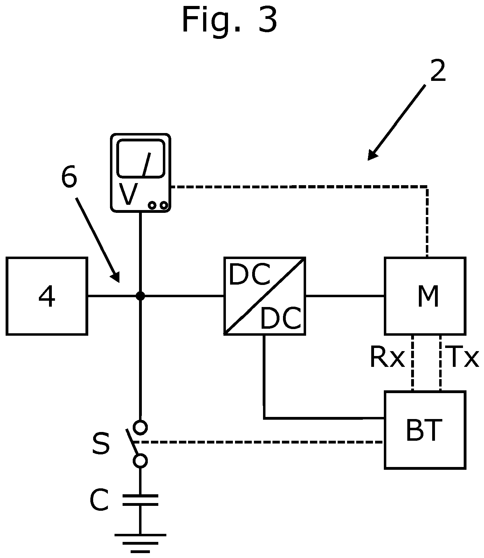

Fig. 3 eine schematische elektronische Schaltung zur Erläuterung des Verfahrens.

In den Figuren sind gleiche Merkmale mit gleichen Bezugszeichen gekennzeichnet.

Fig. 2 zeigt ein Feldgerät FG der Prozessautomatisierungstechnik, beispielsweise einen Sensor. Genauer sind zwei Feldgeräte FG1 und FG2 abgebildet. Bei dem Sensor handelt es sich etwa um einen pH-, Redoxpotential-, auch ISFET-, Leitfähigkeit-, Trübungs- oder Sauerstoff-Sensor. Weitere mögliche Sensoren sind Durchflusssensoren nach den Prinzipien Coriolis, magnetische Induktion, Vortex und Ultraschall. Weitere mögliche Sensoren sind Sensoren zur Messung des Füllstands nach den Prinzipien geführtes und frei strahlendes Radar sowie Ultraschall, auch zur Erkennung eines Grenzstandes, wobei zur Erkennung des Grenzstandes auch kapazitive Verfahren zur Anwendung kommen können. Der Sensor umfasst ein Sensorelement M als ein erstes Funktionsmodul des Feldgeräts FG. Auch kann das Sensorelement M Teil der elektronischen Schaltung 2 sein, siehe unten.

Dargestellt ist links ein pH-Sensor und rechts ein Füllstandsensor nach dem Radarprinzip. Das Feldgerät FG bestimmt eine Messgröße eines Mediums 1, im Beispiel in einem Becher wie auf der linken Seite dargestellt. Gleichwohl sind andere Behältnisse wie Leitungen, Becken (wie auf der rechten Seite dargestellt), Behälter, Kessel, Rohr, Rohrleitung o.ä. möglich.

Das Feldgerät FG kommuniziert mit einer Steuerstelle, etwa direkt mit einem Leitsystem 5 oder mit einem zwischengeschalteten Transmitter. Auch kann der Transmitter Teil des Feldgeräts sein, wie etwa im Falle des Füllstandsensors. Die Kommunikation zum Leitsystem 5 erfolgt über einen Zweileiterbus 4, etwa über HART, PROFIBUS PA oder FOUNDATION Fieldbus. Es ist auch möglich die Schnittstelle 6 zum Bus zusätzlich oder alternativ als drahtlose Schnittstelle auszugestalten, etwa nach dem WirelessHART Standard (nicht abgebildet), wobei über WirelessHART eine Anbindung direkt an ein Leitsystem via einem Gateway erfolgt. Darüber hinaus ist optional oder zusätzlich im Falle des HART-Protokolls eine 4..20 mA Schnittstelle vorgesehen (nicht dargestellt). Erfolgt die Kommunikation zusätzlich oder alternativ zu einem Transmitter statt direkt zum Leitsystem 5, können entweder die oben genannten Bussysteme (HART, PROFIBUS PA oder FOUNDATION Fieldbus) zur Kommunikation verwendet werden, oder es wird beispielsweise ein proprietäres Protokoll, etwa vom Typ "Memosens" verwendet. Entsprechende Feldgeräte wie oben beschrieben werden von der Anmelderin vertrieben.

Wie erwähnt ist am busseitigen Ende des Feldgeräts FG eine Schnittstelle 6 zur Verbindung zum Zweileiterbus 4 vorgesehen. Dargestellt ist eine drahtgebundene Variante zur Anbindung an den Bus mittels der Schnittstelle 6. Die Schnittstelle 6 ist beispielsweise als galvanisch trennende, insbesondere als induktive Schnittstelle ausgestaltet. Dies ist beim pH-Sensor dargestellt. Die Schnittstelle 6 besteht dann aus zwei Teilen mit einem ersten Teil auf der Feldgeräteseite und einem zweiten Teil auf Busseite. Diese sind mittels einer mechanischen Steckverbindung miteinander koppelbar. Es werden über die Schnittstelle 6 Daten (bidirektional) und Energie (unidirektional, d.h. in Richtung von der Steuerstelle 5 zum Feldgerät FG) gesendet. Alternativ wird ein entsprechendes Kabel mit oder ohne galvanische Trennung verwendet. Mögliche Ausführungen umfassen ein Kabel mit einem M12- oder 7/8"-Stecker. Dies ist beispielsweise beim Füllstandmessgerät nach dem Radarprinzip dargestellt.

Das Feldgerät FG umfasst weiter eine elektronische Schaltung 2 umfassend ein Drahtlosmodul BT zur drahtlosen Kommunikation 3. Das Drahtlosmodul BT ist ein zweites Funktionsmodul des Feldgeräts FG. Diese drahtlose Kommunikation 3 dient nicht der Anbindung an den Zweileiterbus 4.

Das Drahtlosmodul BT ist etwa als Bluetooth-Modul ausgestaltet. Das Bluetooth-Modul genügt insbesondere dem Protokollstapel Low Energy als "Bluetooth Low Energy" (auch als BTLE, BLE, oder Bluetooth Smart bekannt). Gegebenenfalls umfasst das Drahtlosmodul BT eine entsprechende Schaltung bzw. Komponenten. Das Feldgerät FG genügt somit zumindest dem Standard "Bluetooth 4.0". Die Kommunikation 3 erfolgt vom Feldgerät FG an eine übergeordnete Einheit H. Die übergeordnete Einheit H ist beispielsweise eine mobile Einheit wie ein Mobiltelefon, ein Tablet, ein Notebook, oder ähnliches. Alternativ kann die übergeordnete Einheit H auch als nicht portables Gerät, wie etwa einem Computer ausgestaltet sein. Alternativ handelt es sich bei der übergeordneten Einheit um ein Display mit entsprechender Schnittstelle.

Fig. 3 zeigt die elektronische Schaltung 2 genauer.

Die Schaltung 2 umfasst als erstes Modul das Sensorelement M und als zweites Modul das Drahtlosmodul BT, die jeweils vom Bus 4 mit Energie versorgt werden. Den beiden vorgeschaltet ist ein Gleichspannungswandler DC (englisch: *DC-DC converter),* wobei ein Energiespeicher C (siehe unten) dem Gleichspannungswandler vorgeschaltet ist. Der Gleichspannungswandler DC wandelt die Eingangsspannung von etwa 10-45 V auf etwa 3-5 V. In einer Alternative (nicht dargestellt) ist der Energiespeicher C nach dem Gleichspannungswandler DC geschaltet.

Das Sensorelement M dient zum Erfassen der Messgröße. Der Zweileiterbus 4 liefert nicht genug Energie, damit das Sensorelement M kontinuierlich aus dem Zweileiterbus 4 mit Energie versorgt werden könnte, deswegen ist dem Sensorelement M ein Energiespeicher C zugeordnet. Der Energiespeicher C versorgt das Sensorelement M somit mit Energie.

Bei dem Energiespeicher C handelt es sich etwa um einen Kondensator zum Speichern von Energie. Im Sinne dieser Erfindung handelt es sich bei einem Energiespeicher nicht um einen Filterkondensator, Glättungskondensator, einen Kondensator zur Sicherstellung der elektromagnetischen Verträglichkeit oder einen Kondensator wie er etwa in Gleichspannungswandlern benötigt wird. Der Energiespeicher C ist direkt aus dem Zweileiterbus 4 ladbar.

Wie erwähnt wird das Sensorelement M über den Energiespeicher C mit Energie versorgt, da der Energiebedarf größer ist als der Zweileiterbus 4 kontinuierlich liefern könnte. Im Allgemeinen handelt es sich bei dem Sensorelement M um ein Modul, das temporär eine große Leistung bzw. Energie benötigt. Diese Energie kann nicht kontinuierlich durch den Zweileiterbus geliefert werden. Alternativ zum Sensorelement M kann ein Drahtlosmodul mit einem erhöhten Energiebedarf gewählt werden, etwa ein WLAN-Modul. Wird anstelle des Sensorelements mit hohem Energiebedarf ein WLAN-Modul verwendet, kann statt des Drahtlosmoduls BT (siehe unten) ein Sensorelement verwendet werden, das kontinuierlich aus dem Bus 4 versorgt werden kann, etwa ein Temperatursensor oder ein Drucksensor, siehe ebenfalls unten.

Die Schaltung 2 umfasst weiter ein Drahtlosmodul BT zum drahtlosen Übertragung der von der Messgröße abhängigen Werte an die übergeordnete Einheit H. Das Drahtlosmodul wird auch von dem Gleichspannungswandler DC versorgt, der die Spannung von etwa 10-45 V auf 3-5 V wandelt. Es kann sich dabei um den gleichen Gleichspannungswandler DC handeln, der auch die Energie für das Sensorelement M liefert (abgebildet), oder es kann ein separater Gleichspannungswandler (nicht dargestellt) oder ein Linearwandler (ebenfalls nicht dargestellt) verwendet werden.

Das Drahtlosmodul BT wird ausschließlich vom Zweileiterbus 4 mit Energie versorgt. Das Drahtlosmodul BT braucht niemals mehr Leistung, als der Zweileiterbus 4 kontinuierlich liefern könnte. Aus diesem Grund ist auch kein weiterer Kondensator, im Allgemeinen kein weiterer Energiespeicher, in diesem Zweig nötig. Das Drahtlosmodul BT als zweites Funktionsmodul umfasst somit keinen Energiespeicher und wird kontinuierlich und ausschließlich durch den Zweileiterbus 4 versorgt. Alternativ zu dem Drahtlosmodul kann auch ein Sensorelement verwendet werden, das kontinuierlich aus dem Bus 4 mit Energie versorgt werden kann, etwa ein Temperatursensor oder ein Drucksensor.

Da das Sensorelement M mehr Energie verbraucht als der Bus 4 kontinuierlich liefern kann, findet eine Messung nur statt, wenn der Energiespeicher C ausreichend gefüllt ist und ein kompletter Messzyklus erfolgen kann. Dazu umfasst die Schaltung 2 auch eine entsprechende Messschaltung V, um den Ladezustand des Energiespeichers C zu überwachen. Nach erfolgter Messung der entsprechenden Messgröße leitet das Sensorelement M von der Messgröße abhängige Werte an das Drahtlosmodul BT weiter. Dazu werden Kommunikationsleitungen Tx und Rx verwendet. Diese Kommunikation ist gestrichelt eingezeichnet.

Alternativ zu den von der Messgröße abhängigen Werten werden Parameter übertragen, wobei als "Parameter" eine Stell- oder Einflussgröße verstanden werden soll, die auf das Sensorelement einwirkt und somit das Verhalten des Sensorelements ändert oder Informationen über den Zustand des Sensorelements liefert. Der Vollständigkeit halber soll erwähnt werden, dass Parameter auch in umgekehrter Richtung übertragen werden können, d.h. eine übergeordnete Einheit überträgt drahtlos Parameter zum Drahtlosmodul, welches die Parameter an das Sensorelement weiterleitet.

Erfindungsgemäß wird vorgeschlagen, dass der Betrieb der Funktionsmodule so gesteuert wird, dass das Modul, das kontinuierlich aus dem Bus 4 gespeist werden kann, Vorrang gegenüber dem Modul hat, das einen Energiespeicher erfordert. In letzter Konsequenz führt dies dazu, dass das Modul mit dem zumindest temporär hohen Energieverbrauch zeitweise nicht voll oder gar nicht funktionsfähig sein könnte. Das Modul ohne Energiespeicher ist dabei jederzeit voll funktionsfähig.

Im konkreten Beispiel kann das Drahtlosmodul BT also immer Senden bzw. Empfangen, während das Sensorelement M seinen Messbetrieb entweder einstellt oder die Messfunktion so verändert, dass das Drahtlosmodul BT immer ausreichend mit Energie direkt aus dem Bus gespeist werden kann. Beispielsweise kann dazu die Messfrequenz heruntergefahren, die Messgenauigkeit verändert oder die Abtastrate etc. verringert werden. Das Drahtlosmodul BT wird auch bei maximaler Sende- oder Empfangsleistung, also bei maximalem Energiebedarf des Drahtlosmoduls, mit ausreichend Energie versorgt. Nur wenn Energie überschüssig ist, wird der Energiespeicher C geladen und entsprechend gemessen wenn der Speicher C voll ist. Diese Messung bzw. die Kommunikation des Ladezustandes ist gestrichelt eingezeichnet.

Das Sensorelement M greift nicht auf Energie zu, die das Drahtlosmodul BT für seinen Betrieb braucht. Die Kapazität des Energiespeichers C ist so ausgestaltet, dass genug Energie für einen kompletten Messzyklus zur Verfügung steht. Deswegen wird eine Messung immer beendet werden können, ein aktueller Messwert wird geliefert und entsprechend an das Drahtlosmodul BT weitergeleitet. Wenn das Drahtlosmodul BT Energie für die Kommunikation braucht, die - wie erwähnt - direkt aus dem Zweileiterbus 4 genommen wird, dann wird der Energiespeicher C für die Messung nicht geladen bzw. kann auch gar nicht aufgeladen werden. Wie erwähnt wird der Ladezustand des Energiespeichers C überwacht und eine Messung wird nur dann gestattet, wenn genug Energie dafür bereitsteht. Aus diesem Grund bekommt das Drahtlosmodul BT für die Drahtloskommunikation 3 immer genug Energie direkt aus dem Zweileiterbus 4. Die Messung wird so lange verzögert bis der Energiespeicher voll ist. Eine Messung wird erst danach gestartet.

In einer ersten Ausgestaltung teilt das Drahtlosmodul BT dem Sensorelement M mit, dass es in Betrieb geht bzw. ist. Das Sensorelement M passt daraufhin seinen Betrieb an, so dass für das Drahtlosmodul BT immer ausreichend Energie zur Verfügung steht.

In einer weiteren Ausgestaltung wird, um sicherzustellen, dass das Drahtlosmodul BT energietechnisch immer Vorrang vor dem Sensorelement M hat, der Energiespeicher C vom Zweileiterbus 4 getrennt. Dies kann beispielsweise durch einen Schalter S gemacht werden. Der Schalter S ist etwa ein FET, beispielsweise ein MOSFET. Das Drahtlosmodul BT kann den Schalter S ansteuern, damit der Energiespeicher C immer zur richtigen Zeit, etwa beim Senden, vom Bus 4 getrennt wird. Das Schalten, bzw. ein Schaltsignal ist gestrichelt eingezeichnet. Diese Koordination kann auch durch eine intelligente Einheit, etwa durch einen Mikroprozessor erfolgen.

Wie oben bereits erwähnt kann statt eines Drahtlosmoduls BT als Funktionsmodul, das kontinuierlich aus dem Bus 4 gespeist werden kann, auch ein Sensorelement mit geringem Energiebedarf gewählt werden, etwa ein Temperatursensor oder ein Drucksensor. Ebenso kann statt eines Sensorelements M als Funktionsmodul mit einem Energiebedarf, der nicht kontinuierlich aus dem Bus 4 gedeckt werden kann, ein Drahtlosmodul mit hohem Energiebedarf gewählt werden, etwa ein WLAN-Modul. Das in den oberen Absätzen gesagte gilt dann analog.

Die Erfindung schlägt also eine Lösung vor, die es einem Funktionsmodul im Feldgerät FG erlaubt die gesamte Energie in einer bestimmten Phase für sich zu beanspruchen. Dies kann durch gegenseitige Signalisierung erfolgen oder vorteilhaft wie oben beschrieben durch Deaktivierung eines vorhandenen Energiespeichers C des anderen Funktionsmoduls. Typischerweise erhält dasjenige Funktionsmodul Vorrang, welches keinen eigenen Energiespeicher besitzt. Das andere Modul darf nur so viel Leistung dauerhaft verwenden, wie zusätzlich gerade noch durch den Zweileiterbus zur Verfügung gestellt werden kann.

Dies hat den Vorteil, dass Funktionsmodule, die keine Energiepufferung benötigen(z.B. Drahtlosmodul BT), parallel zu einer Funktion, welche auf Energiespeicher C angewiesen ist (z.B. Füllstandmessung nach dem Radarprinzip), betrieben werden können. Es ergibt sich somit eine wirksame Energiesynchronisation zwischen verschiedenen Funktionsmodulen in Zweidrahtgeräten. Funktionsmodule ohne Energiespeicher haben dabei Vorrang.

### Bezugszeichenliste

- 1: Behältnis mit zu messendem Medium
- 2: Elektronische Schaltung
- 3: drahtlose Verbindung
- 4: Zweileiterbus
- 5: Steuerstelle
- 6: Schnittstelle
- BT: Drahtlosmodul
- C: Energiespeicherkondensator
- DC: Gleichspannungswandler
- FG: Feldgerät
- H: Übergeordnete Einheit
- M: Sensorelement
- S: Schalter
- Tx: Senden von Werten
- Rx: Empfangen von Werten
- V: Spannungsmessung

## Patentansprüche

1. Verfahren zur Energieverwaltung eines Feldgeräts (FG) der Prozessautomatisierung mit einem erstem Modul (M) und mindestens einem zweiten Modul (BT),
wobei das Feldgerät (FG) durch einen Zweileiterbus (4) mit Energie versorgt wird,
wobei das erste Modul (M) zumindest temporär mehr Energie verbraucht als der Zweileiterbus (4) kontinuierlich liefert, und dem ersten Modul (M) ein aus dem Zweileiterbus (4) gespeister Energiespeicher (C) zugeordnet ist,
wobei das zweite Modul (BT) durch den Zweileiterbus (4) kontinuierlich mit Energie versorgt wird,
**dadurch gekennzeichnet, dass**
das erste Modul ein Sensorelement (M) zum Erfassen einer Messgröße umfasst, wobei das Sensorelement (M) Werte an ein Drahtlosmodul (BT) weiterleitet,
wobei das zweite Modul das Drahtlosmodul (BT) zum drahtlosen Übertragen der Werte an eine übergeordnete Einheit (H) umfasst, und
wobei der Betrieb des ersten und zweiten Moduls (M, BT) so gesteuert wird, dass das zweite Modul (BT) gegenüber dem ersten Modul (M) Vorrang hat und das erste Modul (M) gegebenenfalls zumindest temporär nicht funktionsfähig ist.

2. Verfahren nach Anspruch 1,
wobei das zweite Modul (BT) keinen Energiespeicher umfasst und kontinuierlich und ausschließlich durch den Zweileiterbus (4) mit Energie versorgt wird.

3. Verfahren nach Anspruch 1 oder 2,
wobei das zweite Modul (BT) dem ersten Modul (M) seinen Betrieb mitteilt und das erste Modul (M) seinen Betrieb so anpasst, dass die gesamte benötigte Energie des Feldgeräts (FG) durch den Zweileiterbus (4) bereitgesellt werden kann.

4. Verfahren nach Anspruch 1 oder 2,
wobei während des Betriebs des zweiten Moduls (BT) der Energiespeicher (C) vom Zweileiterbus (4) getrennt wird.

5. Verfahren nach Anspruch 4,
wobei das zweite Modul (BT) den Energiespeicher (C) vom Zweileiterbus trennt.

6. Verfahren nach Anspruch 1,
wobei auch bei maximaler Sendeleistung des Drahtlosmoduls (BT) die gesamte benötigte Energie des Feldgeräts (FG) durch den Zweileiterbus (4) bereitgestellt werden kann.

7. Verfahren nach Anspruch 1 oder 6,
wobei es sich bei dem Sensorelement (M) um ein Sensorelement zu Messung des Füllstandes, insbesondere nach dem Radar-Prinzip, des pH-Wertes, des Redoxpotentials, auch ISFET, der Leitfähigkeit, der Trübung oder des Sauerstoffgehalts handelt.

## Claims

1. Procedure for managing the energy of a field device (FG) used in process engineering with a first module (M) and at least a second module (BT),
wherein the field device (FG) is supplied with energy by a two-wire bus (4),
wherein the first module (M) at least temporarily consumes more energy that the two-wire bus (4) delivers continuously, and an energy storage unit (C) powered by the two-wire bus (4) is assigned to the first module (M),
wherein the second module (BT) is supplied continuously with energy by the two-wire bus (4)
**characterized in that**
the first module comprises a sensor element (M) designed to capture a measured variable, wherein the sensor element (M) forwards values to a wireless module (BT),
wherein the second module comprises the wireless module (BT) for the wireless transmission of values to a higher-level unit (H), and
wherein the operation of the first and second module (M, BT) is controlled in such a way that the second module (BT) has priority over the first module (M) and the first module (M) may not be operational, at least temporarily.

2. Procedure as claimed in Claim 1,
wherein the second module (BT) does not comprises an energy storage unit and is provided with energy continuously and exclusively by the two-wire bus (4).

3. Procedure as claimed in Claim 1 or 2,
wherein the second module (BT) communicates its operation to the first module (M) and the first module (M) adapts its operation in such a way that all the required energy of the field device (FG) can be provided by the two-wire bus (4).

4. Procedure as claimed in Claim 1 or 2,
wherein, during the operation of the second module (BT), the energy storage unit is disconnected from the two-wire bus (4).

5. Procedure as claimed in Claim 4,
wherein the second module (BT) disconnects the energy storage unit (C) from the two-wire bus.

6. Procedure as claimed in Claim 1,
wherein, even in the event of the maximum transmission performance of the wireless module (BT), all the required energy of the field device (FG) can be provided by the two-wire bus (4).

7. Procedure as claimed in Claim 1 or 6,
wherein the sensor element (M) is a sensor element for measuring the level, particularly according to the radar principle, the pH value, the ORP potential, also ISFET, the conductivity, the turbidity or the oxygen content.

## Revendications

1. Procédé destiné à la gestion d'énergie d'un appareil de terrain (FG) de la technique d'automatisation des process avec un premier module (M) et au moins un deuxième module (BT),
l'appareil de terrain (FG) étant alimenté en énergie par un bus bifilaire (4),
le premier module (M) consommant au moins temporairement plus d'énergie que le bus bifilaire (4) n'en fournit en continu, et un accumulateur d'énergie (C) alimenté par le bus bifilaire (4) étant associé au premier module (M),
le deuxième module (BT) étant alimenté en continu par le bus bifilaire (4)
**caractérisé en ce que**
le premier module comprend un élément capteur (M) destiné à détecter une grandeur de mesure, l'élément capteur (M) transmettant des valeurs à un module sans fil (BT),
le deuxième module comprenant le module sans fil (BT) pour transmettre sans fil les valeurs à une unité supérieure (H), et
le fonctionnement du premier et du deuxième module (M, BT) étant commandé de telle sorte que le deuxième module (BT) a la priorité sur le premier module (M) et que le premier module (M) n'est éventuellement pas opérationnel, du moins temporairement.

2. Procédé selon la revendication 1,
pour lequel le deuxième module (BT) ne comprend pas d'accumulateur d'énergie et est alimenté en énergie continuellement et exclusivement par le bus bifilaire (4).

3. Procédé selon la revendication 1 ou 2,
pour lequel le deuxième module (BT) communique son fonctionnement au premier module (M) et le premier module (M) adapte son fonctionnement de manière à ce que toute l'énergie nécessaire de l'appareil de terrain (FG) puisse être fournie par le bus bifilaire (4).

4. Procédé selon la revendication 1 ou 2,
pour lequel, pendant le fonctionnement du deuxième module (BT), l'accumulateur d'énergie est déconnecté du bus bifilaire (4).

5. Procédé selon la revendication 4,
pour lequel le deuxième module (BT) déconnecte l'accumulateur d'énergie (C) du bus bifilaire.

6. Procédé selon la revendication 1,
pour lequel, même en cas de puissance d'émission maximale du module sans fil (BT), la totalité de l'énergie nécessaire de l'appareil de terrain (FG) peut être fournie par le bus bifilaire (4).

7. Procédé selon la revendication 1 ou 6,
pour lequel l'élément capteur (M) est un élément capteur pour la mesure du niveau, notamment selon le principe du radar, la valeur du pH, le potentiel Redox, également ISFET, la conductivité, la turbidité ou la teneur en oxygène.
